Europäisches Patentamt

European Patent Office

Office européen des brevets

(11) Veröffentlichungsnummer: **0 417 463 A1**

# EUROPÄISCHE PATENTANMELDUNG

(21) Anmeldenummer: **90115032.6**

(22) Anmeldetag: **04.08.90**

(51) Int. Cl.⁵: **G02B 6/42**

(30) Priorität: **14.09.89 CH 3362/89**

(43) Veröffentlichungstag der Anmeldung:
**20.03.91 Patentblatt 91/12**

(84) Benannte Vertragsstaaten:
**CH DE FR GB LI**

(71) Anmelder: **ASEA BROWN BOVERI AG**
**Haselstrasse**
**CH-5401 Baden(CH)**

(72) Erfinder: **Brändle, Hubert, Dr.**
**Bahnhofstrasse 34**
**CH-8112 Otelfingen(CH)**
Erfinder: **Rüegg, Walter, Dr.**
**Sonnmattstrasse 7**
**CH-5304 Endingen(CH)**
Erfinder: **Schultheis, Lothar, Dr.**
**Zelglistrasse 12b**
**CH-5442 Fislisbach(CH)**

(54) **Stecker für ein optisches Kabel.**

(57) Ein Stecker (2) für ein optisches Kabel (1) mit mindestens einer Glasfaser (4.1, 4.2) zeichnet sich dadurch aus, dass der Steckkontakt elektrisch ist und die Signalübertragung optisch erfolgt. Zu diesem Zweck ist für die mindestens eine Glasfaser (4.1, 4.2) ein elektrischer Steckkontakt (5.1, 5.2) vorgesehen sowie erste Mittel zum Umsetzen eines elektrischen Signals in ein optisches und/oder zweite Mittel zum Umsetzen eines optischen Signals in ein elektrisches. Die mindestens eine Glasfaser (4.1, 4.2) des optischen Kabels (1) ist direkt an die ersten resp. zweiten Mittel angeschlossen. Die ersten resp. zweiten Mittel sind z.B. verkörpert durch Leuchtdioden resp. Photodioden.

FIG.1

EP 0 417 463 A1

## STECKER FÜR EIN OPTISCHES KABEL

### Technisches Gebiet

Die Erfindung betrifft einen Stecker für ein optisches Kabel mit mindestens einer Glasfaser.

### Stand der Technik

Die optische Datenübertragung weist gegenüber der herkömmlichen elektrischen Signalübertragung eine Reihe von Vorteilen auf. Zu den wichtigsten gehören u.a. folgende:
- grosse Störfestigkeit in elektromagnetisch verschmutzter Umgebung;
- hohe Bandbreite resp. grosse Datenraten;
- geringer Platzbedarf;
- geringer Leistungsbedarf.

Die optische Signalübertragung findet deshalb immer breitere Anwendung. Ein wichtiges Gebiet stellt die Kommunikation (z.B. zwischen EDV-Anlagen) auf lokaler Ebene dar (lokale Netzwerke).

Ein Problem bei der Realisierung von optischen Datenverbindungen stellt jedoch nach wie vor die Steckverbindung von optischen Kabeln dar. Optische Stecker stellen herstellungstechnisch gesehen viel höhere Anforderungen als elektrische Stecker und sind entsprechend auch viel teurer.

Ausserdem sind optische Steckverbindungen empfindlich auf Verschmutzungen der Kontaktfläche.

Ein bisher weitgehend ungelöstes Problem ist die Konstruktion eines optischen Multipolsteckers. Während elektrische Multipolstecker mit einer grossen Zahl von parallelen Leitungen für wenig Geld zu haben sind und von grosser Zuverlässigkeit geprägt sind, gibt es nichts Entsprechendes im optischen Bereich. Man muss sich deshalb meist mit schnellen Multiplexern behelfen, um über optische Leitungen trotzdem eine Art Parallelverbindung erreichen zu können.

Wie bereits gesagt, ist der geringe Platzbedarf ein gewichtiger Vorteil optischer Kommunikation. Während ein (herkömmliches) Koaxialkabel mehrere mm Durchmesser hat, liegt derjenige einer Glasfaser im Bereich von 1/10 mm. Angesichts der Bestrebungen in Richtung auf eine integrierte Optik hin ist für die optische Kommunikation ein immenses Platzsparpotential zu erwarten. Eine Uebersicht über die gegenwärtig zur Verfügung stehenden, integrierten optischen Bauelemente gibt z.B. der Artikel "Bauelemente der integrierten Optik: Eine Einführung", W. Sohler, Laser und Optoelektronik, Nr.4, 1986, pp. 323 - 337.

### Darstellung der Erfindung

Aufgabe der Erfindung ist es nun, einen Stecker der eingangs genannten Art anzugeben, der wenig Platz beansprucht, sich für eine grosse Zahl von parallelen optischen Datenleitungen eignet und die beim Stand der Technik vorhandenen Nachteile vermeidet.

Erfindungsgemäss besteht die Lösung darin, dass

a) für die mindestens eine Glasfaser mindestens ein elektrischer Steckkontakt vorgesehen ist, dass

b) erste Mittel zum Umsetzen eines elektrischen Signals in ein optisches und/oder zweite Mittel zum Umsetzen eines optischen Signals in ein elektrisches vorgesehen sind, und dass

c) die mindestens eine Glasfaser des optischen Kabels direkt an die ersten und/oder zweiten Mittel angeschlossen ist.

Der Kern der Erfindung liegt darin, dass die Vorteile des elektrischen Steckkontakts mit denjenigen der optischen Datenübertragung vereinigt werden. Der Benutzer hat ein Kabel vor sich, das dem Anschein nach ein elektrisches ist und sich entsprechend einfach handhaben lässt, das intern jedoch eine optische Datenübertragung nutzt. Ein solches Kabel kann somit problemlos anstelle eines herkömmliche, rein elektrischen verwendet werden.

Ein wichtiger Gesichtspunkt im Zusammenhang mit optischer Datenübertragung ergibt sich aus der Tatsache, dass auch in naher Zukunft die Datenverarbeitung vorwiegend auf der Basis elektronischer Schaltkreise und damit elektrischer Signale ablaufen wird. Die grosse Zahl von funktionstüchigen optischen Bauelementen (siehe z.B. Zitat W. Sohler) zeigt zwar die fortschreitende Entwicklung auf, vermag aber nicht darüber hinwegtäuschen, dass die Signale zwar optisch übertragen, aber danach wieder in elektrische umgewandelt werden müssen.

Gemäss einer vorteilhaften Ausführungenform umfasst das optische Kabel mehrere Glasfasern. Ausserdem sind die elektrischen Steckkontakte Teil eines elektrischen Multipolsteckers. Zum Justieren und Fixieren der Glasfasern im Stecker ist ein mit Führungsmitteln versehener Träger vorgesehen. Der Vorteil dieser Ausführungsform liegt darin, dass sich der Träger einfach herstellen lässt (mechanisch ritzen, ätzen usw.) und eine präzise Ausrichtung der Faserenden auf entsprechende Lichtquellen ermöglicht.

Vorzugsweise umfassen die ersten Mittel an den Glasfasern direkt angebrachte elektrooptische Sender, z.B. Leuchtdioden (LED), und die zweiten Mitel an den Glasfasern direkt angebrachte optoelektrische Empfänger, z.B. Photpdioden (PD). Die derart erreichte optimale Lichtein- resp. -auskopplung erlaubt mit geringer Leistung zu arbeiten. Entsprechend können thermische Verluste im Stecker gering gehalten werden.

Bei einer weiteren Ausführungsform umfassen die ersten resp. zweiten Mittel einen Array von elektrooptischen Sendern (z.B. Leuchtdioden) resp. optoelektrische Empfänger (z.B. Photodioden), die jeweils auf einem gemeinsamen Halbleitersubstrat integriert sind. Diese integrierte Lösung ist wegen ihres niedrigen Herstellungs-/Montageaufwandes besonders bevorzugt.

Im Hinblick auf einen möglichst geringen Leistungsverlust im Stecker ist es vorteilhaft, wenn die ersten Mittel mindestens einen integrierten optischen Schalter umfassen, der von einem Signal eines entsprechenden Steckkontakts gesteuert wird, und eine für mehrere Glasfasern gemeinsame Lichtquelle vorgesehen ist, von welcher das zur Signalübertragung benötigte Licht mit einem zusätzlichen Lichtleiter dem Stecker zugeführt und auf den mindestens einen integrierete optische Schalter verteilt wird. ein zusätzlicher Lichtleiter vorgesehen ist, um das zur Signalübertragung benötigte Licht zuzuführen.

Anstelle einer externen Lichtquelle kann auch eine für mehrere Glasfasern gemeinsame Lichtquelle im Stecker vorgsehen sein, von welcher das zur Signalübertragung benötigte Licht auf den mindestens einen integrierete optische Schalter verteilt wird. Diese Ausführungsform hat den Vorteil einer leistungslosen Steuerung und ist ausserdem einer hohen, herstellungstechnischen Integrationsstufe zugänglich.

Ein Stecker mit integrierten optischen Schaltern umfasst vorzugsweise einen transmittiven Sternkoppler zum Aufteilen des Lichts aus der gemeinsamen Lichtquelle und als integrierte optische Schalter ein integriertes Mach-Zehnder-Interferometer oder einen schaltbaren Richtkoppler. Dabei entspricht es ebenso der Erfindung, den Stecker aus diskreten Bauelementen zusammenzusetzen als auch einzelne oder mehrere Komponenten zu integrieren.

Aus der Gesamtheit der abhängigen Patentansprüchen ergeben sich weitere vorteilhafte Ausführungsformen.

## Kurze Beschreibung der Zeichnungen

Nachfolgend soll die Erfindung anhand von Ausführungsbeispielen und im Zusammenhang mit den Zeichnungen näher erläutert werden.

Es zeigen:

Fig. 1 ein optisches Kabel mit einem erfindungsgemässen Stecker;

Fig. 2 eine schematische Darstellung eines Steckers mit Mittel zum Umsetzen eines elektrischen Signals in ein optisches;

Fig. 3 eine schematische Darstellung eines Steckers, bei welchem die Mittel zum Umsetzen des Signals einen in einem gemeinsamen Halbleitersubstrat integrierten Array von Leuchtdioden umfasst;

Fig. 4 eine schematische Darstellung eines Steckers, bei dem Licht über einen zusätzlichen Lichtleiter zugeführt wird;

Fig. 5 ein integriertes Mach-Zehnder-Interferometer; und

Fig. 6 ein elektrooptisch schaltbarer Richtkoppler.

Die in den Zeichnungen verwendeten Bezugszeichen und deren Bedeutung sind in der Bezeichnungsliste zusammenfassend aufgelistet. Grundsätzlich sind in den Figuren gleiche Teile mit gleichen Bezugszeichen versehen.

## Wege zur Ausführung der Erfindung

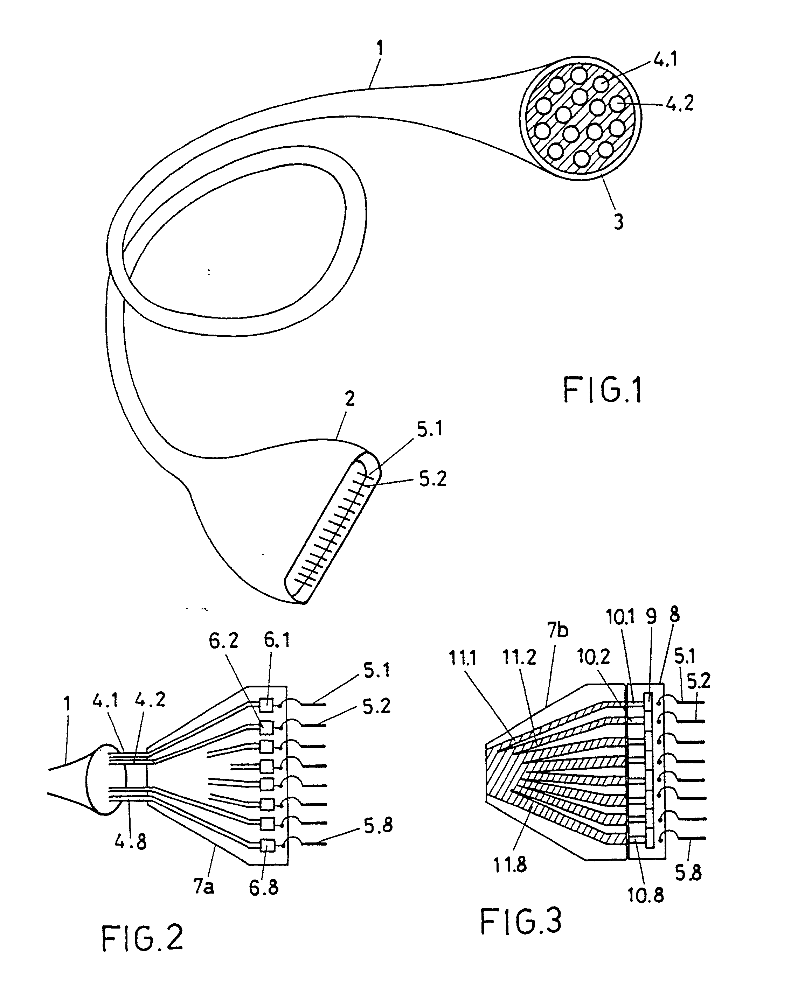

Fig. 1 zeigt ein Kabel 1 für optische Signalübertragung. An einem oder beiden seiner Enden hat es einen erfindungsgemässen Stecker 2. Das Kabel 1 weist z.B. einen Mantel 3 auf, der mehrere Glasfasern 4.1, 4.2 umschliesst. Jedem dieser Glasfasern 4.1, 4.2 ist ein elektrischer Steckkontakt 5.1, 5.2 eines elektrischen Multipolsteckers zugeordnet. Es ist aber nicht unbedingt so, dass jedem elektrischen Steckkontakt eine Glasfaser zugeordnet ist.

Wenn das Kabel 1 an beiden Enden mit einem erfindungsgemässen Stecker abgeschlossen ist, wobei in einem ersten Stecker z.B. Mittel zum Umsetzen eines elektrischen Signals in ein optisches und im zweiten Stecker Mittel zum Umsetzen eines optischen Signals in ein elektrisches vorgesehen sind, dann steht ein Verbindungskabel mit elektrischen Steckern und optischer Uebertragung zur Verfügung. Mit dem genannten Verbindungskabel können Daten parallel übertragen werden und zwar in Richtung vom ersten zum zweiten Stecker.

Für ein bidirektionales Kabel sind in jedem der beiden Stecker sowohl Mittel der ersten als auch der zweiten Art vorzusehen.

Fig. 2 zeigt schematisch den Aufbau des erfindungsgemässen Steckers. Aus dem optischen Kabel 1 ragen beispielsweise 8 Glasfasern 4.1, 4.2, ..., 4.8 heraus. Sie fächern sich auf und sind mit ihren Enden je an eine Leuchtdiode (LED) 6.1, 6.2, ...,

6.8 direkt angeklebt. Die Leuchtdioden 6.1, 6.2, ..., 6.8 können beispielsweise einzelne Bauelemente (Chips) sein, die auf einem Träger 7a befestigt sind. Jede Leuchtdiode 6.1, 6.2, ..., 6.8 ist elektrisch an einen zugehörigen Steckkontakt 5.1, 5.2, ..., 5.8 angeschlossen.

Im vorliegenden Fall ist der Stecker also der Eingang des Kabels 1. Die an den Steckkontakten 5.1, 5.2, ..., 5.8 anliegenden elektrischen Signale werden durch die Leuchtdioden 6.1, 6.2, ..., 6.8 in optische Signale umgesetzt, in die direkt angeschlossenen Glasfasern 4.1, 4.2, ..., 4.8 eingekoppelt und parallel zum zweiten Stecker (in den Figuren nicht gezeigt) übertragen. Dort erfolgt wieder eine Umsetzung der optischen Signale in elektrische. Der zweite Stecker ist dabei völlig analog zu dem in Fig. 2 gezeigten aufgebaut. Allerdings befinden sich dort anstelle von Leuchtdioden geeignete Photodioden, die die optisch-elektrische Umsetzung bewirken. An entsprechenden Steckkontakten des zweiten Steckers sind schliesslich elektrische Signale abnehmbar.

Um möglichst geringe Energieverluste hinnehmen zu müssen und so eine unerwünschte Erwärmung des Steckers vermeiden zu können, werden die Leuchtdiode mit Vorteil ohne Chipgehäuse durch einen geeigneten, transparenten (index-matching) Kleber direkt auf die Enden der Glasfasern aufgeklebt. Damit kann die grösstmögliche Menge Licht in die Glasfasern eingekoppelt werden. Eine solche Montage hat auch einen geringen Platzbedarf. Die schützende Funktion des fehlenden Chipgehäuses übernimmt z.B. ein verschweissbares Steckergehäuse.

Im folgenden werden nun weitere Ausführungsformen der Erfindung beschrieben.

Fig. 3 zeigt eine Ausführungsform, bei der die Mittel zum Umsetzen des Signals einen integrierten Array von Leuchtdioden umfasst. Auf einem gemeinsamen Halbleitersubstrat 8 ist ein Array 9 von Leuchtdioden (d.h. eine Reihe linear nebeneinander angeordneter Elemente) integriert. Die Leuchtdioden sind also zusammen in einem gemeinsamen Herstellungsprozess nebeneinander (und zwar in einem geeigneten Abstand voneinander) im Halbleitersubstrat 8 erzeugt worden.

Gemäss einer besonders bevorzugten Ausführungsform sind im Halbleitersubstrat 8 zusätzlich noch integrierte Wellenleiterbahnen 10.1, 10.2, ..., 10.8 vorgesehen. Sie nehmen das Licht der jeweiligen Leuchtdiode auf und enden an einer Seitenfläche des Halbleitersubstrats 8. Das aus den integrierten Wellenleiterbahnen 10.1, 10.2, ..., 10.8 austretende Licht wird in die direkt anschliessenden Glasfasern des optischen Kabels eingekoppelt.

Damit die Glasfasern möglichst gut auf die Wellenleiterbahnen justiert werden können, ist ein Träger 7b vorgesehen, der Führungsmittel aufweist. Diese könne z.B. durch V-förmige Gräben 11.1, 11.2, ..., 11.8 verkörpert sein. Solche Gräben lassen sich ohne Schwierigkeiten und sehr genau einätzen oder einritzen.

Für den Träger eignen sich herkömmliche Leiterplattenmaterialien (Epoxy-Harze) sowie Silizium oder andere in der Halbleitertechnologie verwendete Materialien.

Bei der Herstellung des Steckers werden die einzelnen Glasfasern des Kabels in die Gräben 11.1, 11.2, ..., 11.8 gelegt und festgeklemmt oder festgeklebt. Danach muss nur noch der Träger 7b als ganzes auf das Halbleitersubstrat, d.h. die Wellenleiterbahnen, justiert werden.

Analog kann mit einem Stecker verfahren werden, in welchem die optischen Signale in elektrische umgesetzt werden. Wiederum mit dem Unterschied, dass anstelle eines Arrays von Leuchtdioden ein solcher von Photodioden verwendet wird.

Die Führungsmittel sind allein dazu da, eine präzise Herstellung zu garantieren und zu erleichtern. Ebenso ist es primär eine Frage der Herstellungstechnologie, welches Material für den Träger gewählt wird. Silizium bietet den Vorteil, dass eine breite Palette von präzisen und effizienten Bearbeitungsverfahren (Aetzen im Batchbetrieb) zur Verfügung steht. Entsprechend wird es für die Zwecke der Erfindung besonders bevorzugt.

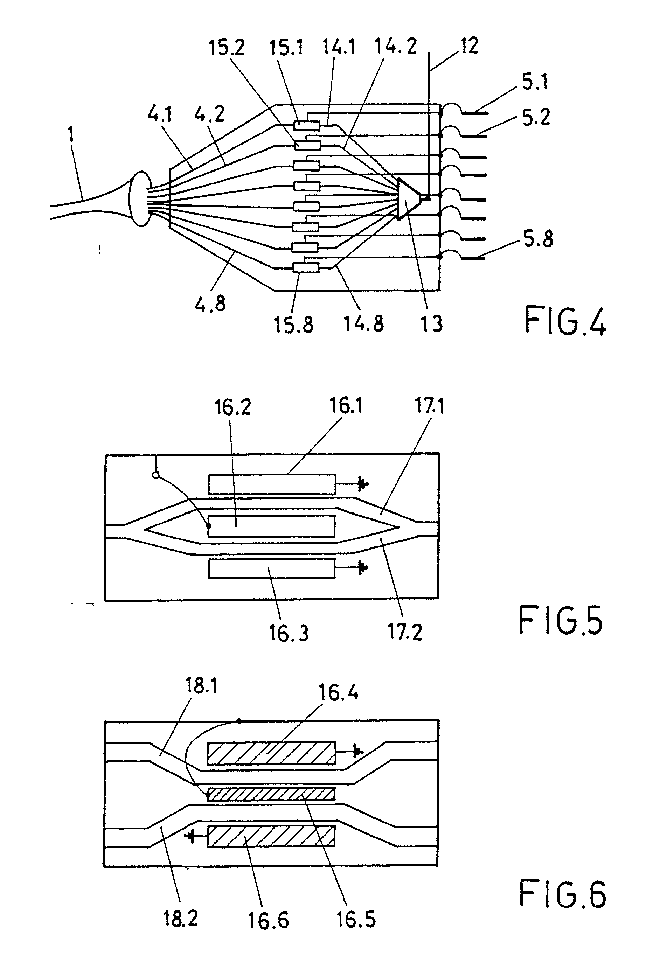

Fig. 4 zeigt eine weitere bevorzugte Ausführungsform. Bei einm entsprechenden Stecker wird das für die Signalübertragung benötigte Licht nicht im Stecker selbst sondern extern von einer gemeinsamen Lichtquelle (z.B. Laser) erzeugt. Mit einem zusätzlichen Lichtleiter 12 wird es dann dem Stecker zugeführt. Hier wird es z.B. mit einem transmittiven Sternkoppler 13 auf eine vorgegebene Anzahl (von z.B. 8) Lichtleiter 14.1, 14.2, ..., 14.8 aufgeteilt. Jeder Lichtleiter 14.1, 14.2, ..., 14.8 führt zu einem integrierten optischen Schalter 15.1, 15.2, ..., 15.8, hinter welchem dann die Glasfaern 4.1, 4.2, ..., 4.8 des Kabels direkt angeschlossen sind.

Die integrierten optischen Schalter 15.1, 15.2, ..., 15.8 werden durch die an den entsprechenden Steckkontakten 5.1, 5.2, ..., 5.8 anliegenden elektrischen Signale gesteuert. Wenn beispielsweise ein optischer Schalter vom Typ eines Mach-Zehnder-Interferometers verwendet wird, dann wird beim Anlegen einer Spannung der Lichtstrom des entsprechenden Lichtleiters unterbrochen. Dies hat den Vorteil, dass das Kabel ständig überwacht werden kann. Falls eine Glasfaser des Kabels bricht, so kann dies am anderen, empfangenden Ende des Kabels sogleich festgestellt werden.

Fig. 5 zeigt eine mögliche Ausgestaltung eines an sich bekannten integrierten Mach-Zehnder-Interferometers. Es weist nebeneinander drei Elektroden 16.1, 16.2, 16.3 auf. Ein in einem $LiNbO_3$-Kristall integrierter Wellenleiter spaltet sich auf in zwei Wellenleiterarme 17.1, 17.2, welche je zwischen zwei Elektroden hindurch laufen. Wenn nun an die mittlere Elektrode 16.2 ein Spannung angelegt wird, erfährt das Licht in den beiden Wellenleiterarmen 17.1, 17.2 eine unterschiedliche Phasenschiebung und überlagert sich am Ende der Wellenleiterarme destruktiv.

Fig. 6 zeigt eine weiter Möglichkeit zur Realisierung eines integrierten optischen Schalters. Es handelt sich dabei um einen solchen vom Typ eines schaltbaren Richtkopplers. In einem geeigneten elektrooptischen Substrat (z.B. LiNbO$_3$) sind zwei Wellenleiter 18.1, 18.2 integriert. Auf dem Substrat sind nebeneinander drei Elektroden 16.4, 16.5, 16.6 angeordnet. Die beiden Wellenleiter 18.1, 18.2 verlaufen in einem Abschnitt je zwischen einem Paar von Elektroden 16.4 und 16.5 resp. 16.5 und 16.6 hindurch und zwar so, dass das Licht vom einen Wellenleiter in den anderen gekoppelt wird. Wenn an die mittlere Elektrode 16.5 eine Spannung angelegt wird, dann ändert sich die Ausbreitungskonstante des Lichts im Substrat und die Kopplung des Lichts wird gestört oder sogar unterbrochen.

Für die Zwecke der Erfindung werden zwei einander diametral gegenüberliegende Enden der beiden Wellenleiter 18.1, 18.2 als optischer Eingang resp. Ausgang des Schalters verwendet. In Abwesenheit eines Signals am entsprechenden Steckkontakt wird das zugeführte Licht ausgangsseitig in die Glasfaser des Kabels eingekoppelt. Damit steht wiederum die Möglichkeit zur ständigen Ueberwachung zur Verfügung.

Beim Richtkoppler besteht aber zusätzlich die Option einer redundanten Signalübertragung. In diesem Fall müssen einfach beide Wellenleiter 18.1, 18.2 ausgangsseitig an eine Glasfaser angeschlossen werden.

Sowohl Richtkoppler als auch Mach-Zehnder-Interferometer sind als solche bekannt (siehe zitierten Artikel von W. Sohler). Sie können auch andere Formen als oben beschrieben annehmen. Zusammen mit weiteren, hier nicht speziell diskutierten, integrierten optischen Schaltelementen haben sie den Vorteil, dass sie nahezu leistungslos gesteuert werden können.

Gemäss einer weiteren Ausführungsform ist im Stecker eine gemeinsame Lichtquelle, z.B. eine Laserdiode, untergebracht. In der Darstellung von Fig. 4 wäre sie dort anzuordnen, wo der zusätzliche Lichtleiter 12 endet, d.h. also eingangsseitig des Sternkopplers. Sie kann z.B. über geeignete Steckkontakte des elektrischen Multipolsteckers mit elektrischer Energie versorgt werden. Im übrigen funktioniert die vorliegende Ausführungsform wie die in Fig. 4 gezeigte. Insbesondere kann der Sternkoppler im Hinblick auf eine höhere Integrationsstufe durch eine integrierte optische Linse oder durch eine holografische Beugungsstruktur ersetzt werden. Einzelheiten zu solchen integrierten optischen Elementen sind z.B. dem Artikel von W. Sohler zu entnehmen.

Für die Ausführungsform gemäss Fig. 4 sind verschiedene Integrationsstufen möglich. Bei einem einfachen, diskreten Aufbau sind die integrierten optischen Schalter unabhängige Bauelemente (Chips) und die Lichtleiter 14.1, 14.2,..., 14.8 einzelne Glasfaserstücke. In einer höheren Integrationsstufe sind z.B. die optischen Schalter zusammen mit den Lichtleitern 14.1, 14.2,..., 14.8 auf einem gemeinsamen Substrat integriert. Schliesslich kann auch noch der Sternkoppler im Sinn der integrierten Optik ausgeführt sein. Nähere Angaben zu entsprechenden optischen Modulatoren (Mach-Zehnder-Interferometer, Richtkoppler u. dgl.) sind dem genannten Artikel von W. Sohler zu entnehmen.

Ein Anwendungsgebiet der Erfindung ist die Teilchenphysik mit ihren immer grösseren Detektoreinheiten. Diese müssen z.B. oft möglichst eng um den Kollisionspunkt von zwei Teilchen angeordnet werden. In einem solchen Fall ist nun von zentraler Bedeutung, dass in einem geringen Kabelquerschnitt eine grösstmögliche Zahl von Kanälen untergebracht werden kann und dass ganz allgemein so wenig Verlustwärme wie möglich erzeugt wird (Problem der Wärmeabfuhr).

Wenn nun beispielsweise eine Driftkammer mit oft mehreren hundert Kanälen mit einem oder mehreren erfindungsgemässen Steckern kontaktiert wird, dann können die beim Stand der Technik vorhandenen, thermischen und platzmässigen Probleme vermieden werden. Dies ist insbesondere dann der Fall, wenn das Licht extern erzeugt und über einen zusätzlichen Lichtleiter zugeführt wird.

Neben kernphysikalischen Anwendungen hat die Erfindung eine grosse Zahl von weiteren Einsatzmöglichkeiten und zwar überall dort, wo grosse Kanaldichten, hohe Störfestigkeit und geringe elektrische Verluste gefordert sind. Als Beispiel sei die Vernetzung von Hochleistungs-Computern genannt.

Bei einem Faserdurchmesser von z.B. 250 μm kann ohne weiteres ein 64-poliges Kabel hergestellt werden, das querschnittsmässig nicht grösser als ein herkömmliches Koaxialkabel ist. Mit zunehmender Zahl von Glasfasern pro Stecker werden die Vorteile der Erfindung immer wichtiger. Grundsätzlich liegt der Erfindung das Bestreben zu Grunde, möglichst viele parallele Kanäle in einem Kabel zu vereinigen.

Die Erfindung umfasst eine grosse Zahl von Ausführungsformen, die hier nicht explizit erläutert worden sind, die sich aber für den Fachmann aus der Beschreibung ohne weiteres ergeben. In diesem Zusammenhang ist festzuhalten, dass die Begriffe Glasfaser, Leuchtdiode, Photodiode u. dgl.

weit zu fassen sind. Ob es sich um Mono- oder Multimodefasern, um gewöhnliche LEDs oder um Laserdioden, um schnelle Photodioden oder irgendwelche Avalanche-Dioden, um Modulatoren aus $LiNbO_3$, Halbleitermaterial oder Polymeren handelt, spielt für das Prinzip der Erfindung eine untergeordnete Rolle. Wesentlich ist die Kombination von elektrischem Eingang (Steckseite) eund optischem Ausgang (Kabelseite) des Steckers. Dadurch dass der heikle optische Steckkontakt vermieden wird und dass die elektro-optische Umsetzung im Stecker selbst erfolgt, ist der Benutzer die aus dem Stand der Technik bekannten Probleme los.

Abschliessend kann gesagt werden, dass die Erfindung ein hochwertiges Datenübertragungskabel schafft, das für den Benutzer einfach und problemlos zu handhaben ist.

### BEZEICHNUNGSLISTE

1 - Kabel; 2 - Stecker; 3 - Mantel; 4.1, 4.2, 4.8 - Glasfaser; 5.1, 5.2, 5.8 - Steckkontakt: 6.1, 6.2, 6.8 - Leuchtdiode; 7a, 7b - Träger; 8 - Halbleitersubstrat; 9 - Array; 10.1, 10.2 Wellenleiterbahnen; 11.1, 11.2, 11.8 - Gräben; 12 - Lichtleiter 13 - Sternkoppler; 14.1, 14.2, 14.8 - Lichtleiter; 15.1, 15.2, 15.8 - optischer Schalter; 16.1, 16.2, 16.3, 16.4, 16.5, 16.6 Elektroden; 17.1, 17.2 - Wellenleiterarme; 18.1, 18.2 Wellenleiter.

### Ansprüche

1. Stecker für ein optisches Kabel mit mindestens einer Glasfaser, dadurch gekennzeichnet, dass
   a) für die mindestens eine Glasfaser mindestens ein elektrischer Steckkontakt vorgesehen ist, dass
   b) erste Mittel zum Umsetzen eines elektrischen Signals in ein optisches und/oder zweite Mittel zum Umsetzen eines optischen Signals in ein elektrisches vorgesehen sind, und dass
   c) die mindestens eine Glasfaser des optischen Kabels direkt an die ersten und/oder zweiten Mittel angeschlossen ist.
2. Stecker nach Anspruch 1, dadurch gekennzeichnet, dass
   a) das optische Kabel mehrere Glasfasern umfasst,
   b) die Steckkontakte Teil eines elektrischen Multipolsteckers sind und
   c) zum Justieren und Fixieren der Glasfasern im Stecker ein mit Führungsmitteln versehener Träger vorgesehen ist.
3. Stecker nach Anspruch 2, dadurch gekennzeichnet, dass die zweiten Mittel an den Glasfasern direkt angebrachte optoelektronische Empfänger umfassen.
4. Stecker nach Anspruch 2, dadurch gekennzeichnet, dass die zweiten Mittel einen Array von optoelektronischen Empfängern umfassen, der auf einem gemeinsamen Halbleitersubstrat integriert ist.
5. Stecker nach Anspruch 2, dadurch gekennzeichnet, dass die ersten Mittel an den Glasfasern direkt angebrachte elektrooptische Sender umfassen.
6. Stecker nach Anspruch 2, dadurch gekennzeichnet, dass die ersten Mittel einen Array von elektrooptischen Empfängern umfassen, der auf einem gemeinsamen Halbleitersubstrat integriert ist.
7. Stecker nach Anspruch 2, dadurch gekennzeichnet, dass
   a) die ersten Mittel mindestens einen integrierten optischen Schalter umfassen, der von einem Signal eines entsprechenden Steckkontakts gesteuert wird, und dass
   b) eine für mehrere Glasfasern gemeinsame Lichtquelle im Stecker vorgesehen ist, von welcher das zur Signalübertragung benötigte Licht auf den mindestens einen integrierte optische Schalter verteilt wird.
8. Stecker nach Anspruch 2, dadurch gekennzeichnet, dass
   a) die ersten Mittel mindestens einen integrierten optischen Schalter umfassen, der von einem Signal eines entsprechenden Steckkontakts gesteuert wird, und dass
   b) eine für mehrere Glasfasern gemeinsame Lichtquelle vorgesehen ist, von welcher das zur Signalübertragung benötigte Licht mit einem zusätzlichen Lichtleiter dem Stecker zugeführt und auf den mindestens einen integrierte optische Schalter verteilt wird.
9. Stecker nach Anspruch 7 oder 8, dadurch gekennzeichnet, dass ein transmittiver Sternkoppler zum Aufteilen des Lichts aus dem zusätzlichen Lichtleiter auf ·die integrierten optischen Schalter vorgesehen ist.
10. Stecker nach Anspruch 7 oder 8, dadurch gekennzeichnet, dass die ersten Mittel als optischen Schalter ein integriertes Mach-Zehnder-Interferometer oder einen integrierten schaltbaren Richtkoppler umfassen.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 544 608 (FRAUNHOFER)<br>* Ansprüche 1-22; Figur 1 * | 1-3,5 | G 02 B 6/42 |
| Y | | 4,6 | |
| Y | ELECTRONICS, Band 49, Nr. 18, 2. September 1976, Seiten 94-99; H. SCHMID: "Fiber-optic data transmission: a practical, low-cost technology"<br>* Figuren 2,3 * | 4,6 | |
| X | US-A-3 663 822 (T. UCHIDA)<br>* Spalte 3; Figuren 1,2a,2b * | 1,3-6 | |
| X | US-A-4 595 839 (S.W. BRAUN)<br>* Zusammenfassung; Ansprüche 1,2; Figuren 1-12 * | 1-3,5 | |
| D,A | LASER UND OPTOELEKTRONIK, Nr. 4, 1986, Seiten 323-337; W. SOHLER: "Bauelemente der integrierten Optik: eine Einführung integrated optical devices: An introduction"<br>* Seite 323; Figuren 5,8 * | 7-10 | |

RECHERCHIERTE SACHGEBIETE (Int. Cl.5)

G 02 B

Der vorliegende Recherchenbericht wurde für alle Patentansprüche erstellt

| Recherchenort | Abschlußdatum der Recherche | Prüfer |
|---|---|---|
| DEN HAAG | 26-09-1990 | MALIC K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)